# FASCICULE DE BREVET EUROPEEN

(11) **EP 0 371 870 B1**
(45) Date de publication et mention de la délivrance du brevet: **20.01.1993**
(21) Numéro de dépôt: 89403285.3
(22) Date de dépôt: 27.11.1989
(51) Int. Cl.: G01V 1/40

(54) **Méthode et dispositif d'acquisition et de traitement de signaux obtenus dans des puits et notamment dans des puits horizontaux**
Verfahren und Vorrichtung zur Aufnahme und Bearbeitung von aus Bohrlöchern stammenden Signalen, insbesondere in horizontalen Bohrlöchern
Method and apparatus for acquiring and treating signals obtained in boreholes, especially in horizontal boreholes

(30) Priorité: 28.11.1988 FR 8815654
(43) Date de publication de la demande: 06.06.1990
(73) Titulaire: INSTITUT FRANCAIS DU PETROLE, 92502 Rueil-Malmaison (FR)
(72) Inventeur: Mari, Jean-Luc, F-78400 Chatou (FR)
(74) Mandataire: Andreeff, François

(56) Documents cités:
- EP-A- 0 246 148
- GB-A- 2 094 865
- US-A- 2 212 273
- US-A- 3 512 407
- ANNALES DES TELECOMMUNICATIONS ET BULLETIN SIGNALETIQUE DES TELECOMMUNICATIONS, vol. 34, nos. 3-4, 1979, pages 142-153, Issy-les-Moulineaux, FR; J.-L. LACOUME: "Différentes approches de l'analyse spectrale"

## Description

L'invention a pour objet une méthode et un dispositif d'acquisition et de traitement de signaux obtenus dans des puits et notamment des puits ou forages sensiblement horizontaux traversant une zone souterraine, permettant une bonne discrimination entre les discontinuités du sous-sol. Elle s'applique particulièrement bien pour faire la discrimination entre des discontinuités géologiques orientées sensiblement dans la même direction que le puits et situées de part et d'autre de celui-ci, sur des enregistrements obtenus au moyen d'un outil de diagraphie déplacé dans le puits.

L'investigation d'une zone du sous-sol susceptible par exemple de contenir des hydrocarbures peut être réalisée en forant un puits au travers de la zone et en descendant à l'intérieur un outil de diagraphie comportant une ou plusieurs unités d'émission adaptées à émettre des signaux dans les formations géologiques autour du puits et une ou plusieurs unités de réception pour recevoir les signaux réfléchis et réfractés par les discontinuités du sous-sol plus ou moins proches du puits. Les signaux reçus sont généralement transmis à un laboratoire en surface et enregistrés. Les enregistrements sont ensuite traités de manière à les rendre plus lisibles par l'interprétateur. Les signaux émis et reçus peuvent être de nature très différente. Il peut s'agir par exemple d'ondes acoustiques, d'ondes électro-magnétiques etc. La méthode selon l'invention va être décrite ci-après en relation avec une utilisation d'ondes acoustiques. Mais il va de soi qu'il ne s'agit que d'un cas particulier qui ne saurait restreindre la généralité de la méthode.

Les forages sont souvent verticaux ou sensiblement verticaux. Mais dans les zones du sous-sol que les géologues estiment les plus susceptibles de contenir des hydrocarbures, il est courant de réaliser des forages très fortement inclinés par rapport à la verticale et même sensiblement horizontaux de façon à traverser les couches souterraines sous un angle faible et d'obtenir des informations sur le toit et le mur (ou base) d'un réservoir éventuel. Il importe dans ces conditions, de faire la discrimination entre les ondes reçues provenant des formations au-dessus et au-dessous du forage. Cela est possible tant que le pendage des réflecteurs par rapport à la direction du puits n'est pas trop faible et qu'il est de même signe vers le toit et le mur de la zone traversée ou réservoir. Si tel est le cas, les vitesses apparentes des signaux acoustiques reçus (événements) de part et d'autre du puits sont de signes opposés et l'on peut les dissocier en employant une méthode classique de filtrage en vitesse apparente, comme il est bien connu en géophysique.

Un procédé de prospection applicable dans des puits faiblement inclinés par rapport à l'horizontale est décrit par exemple dans la demande de brevet européen EP 246 148.

La discrimination sur les diagraphies des signaux provenant respectivement du mur et du toit d'un réservoir devient très difficile lorsque le pendage relatif des réflecteurs par rapport à la direction du puits est quasiment nul ou réduit à quelques degrés du fait que ces signaux ont des vitesses apparentes très voisines.

Cette configuration qui est fréquente dans les puits très déviés ou horizontaux, se retrouve aussi dans les parties verticales ou à faible inclinaison des forages traversant une zone de failles ayant sensiblement la même orientation. On sait aussi que le pourtour d'un puits, quelle que soit sa direction, est généralement altéré par la boue qui a été utilisée lors du forage et s'est infiltrée dans les formations. la vitesse de propagation des ondes dans cette zone périphérique est de ce fait différente de celle dans les formations alentour et des réflexions parasites se produisent donc sur les interfaces sensiblement parallèles à la direction du puits. Là encore, la discrimination sur les enregistrements entre les ondes réfléchies provenant respectivement des côtés opposés du puits est rendu pratiquement impossible.

La méthode selon l'invention permet de faire une bonne discrimination notamment entre les discontinuités géologiques (ou marqueurs) situées de part et d'autre d'un puits ou forage traversant une zone du sous-sol et ayant sensiblement même orientation que lui. Elle comporte le déplacement d'un outil de diagraphie le long du puits et la réalisation de cycles d'émission-réception comprenant chacun l'émission d'ondes dans les formations du sous-sol environnant le puits par des moyens d'émission, la réception des ondes renvoyées par les discontinuités du sous-sol, par moyens de réception et l'enregistrement des signaux reçus de manière à réaliser des sections représentatives des formations autour du puits. Elle est caractérisée en ce qu'elle comporte :
- la réalisation par un déplacement de l'outil en une succession d'emplacements le long d'une portion au moins du puits, d'au moins deux séries de cycles d'émission-réception correspondant à des positions transversales différentes des moyens d'émission et/ou des moyens de réception par rapport à l'axe du puits, le passage d'une position à une autre étant effectué par une translation d'amplitude contrôlée desdits moyens d'émission et/ou de réception sensiblement dans un même plan axial déterminé, de manière que les distances entre lesdits moyens et les discontinuités situées de part et d'autre soient différentes pour chaque série de cycles effectuée, et,
- la combinaison entre elles des sections d'enregistrements obtenues à la suite desdites séries de cycles le long de ladite portion de puits, de manière à réaliser des sections où lesdites discontinuités de part et d'autre du puits sont séparées les unes des autres.

En chaque emplacement le long du puits occupé par l'outil de diagraphie, on peut réaliser au moins deux cycles d'émission-réception successifs, la position transversale des moyens d'émission et/ou des moyens de réception relativement à l'axe du puits étant différente à chaque cycle.

Lesdites séries de cycles d'émission-réception peuvent aussi être effectuées successivement en déplaçant transversalement les moyens d'émission et/ou les moyens réception par rapport à l'axe du puits entre deux séries successives.

Suivant un mode de réalisation, les déplacements longitudinaux et transversaux sont effectués par déplacement de l'outil de diagraphie relativement au puits.

Suivant un autre mode de réalisation, les moyens d'émission set/ou les moyens de réception comportent au moins deux unités distinctes latéralement décalées l'une par rapport à l'autre, relativement à l'axe du puits, les unités employées pour effectuer deux cycles d'émission-réception à un même emplacement longitudinal du puits étant différentes.

Suivant un autre mode de réalisation, les positions transversales différentes des moyens d'émission et/ou des moyens de réception sont obtenues par déplacement latéral de ces dits moyens, relativement à l'outil de diagraphie.

D'autres caractéristiques et avantages de la méthode et les caractéristiques d'outils de diagraphie adaptés à la réalisation de la méthode, apparaîtront à la lecture de la description de modes de réalisation donnés à titre d'exemples non limitatifs en se référant aux dessins annexés où :
- la figure 1 montre de façon schématique un dispositif d'acquisition et de traitement de signaux dans un puits très dévié;
- la figure 2 montre schématiquement un mode de réalisation d'un outil de diagraphie pouvant être décentré;
- la figure 3 montre schématiquement la disposition des patins d'ancrage de l'outil de diagraphie de la figure 2;
- les figures 4a et 4b montrent deux sections d'enregistrement correspondant à une même portion d'un puits pour deux valeurs différentes d'excentrement de l'outil de diagraphie de la figure 2;
- les figures 5a et 5b montrent l'effet d'une combinaison de différentes sections d'enregistrement obtenues, après mise en phase, par une technique de sommation ou de moyenne, qui permet la discrimination des discontinuités d'un côté du puits et du côté opposé; et
- les figures 6a, 6b montrent l'effet d'une combinaison des différentes sections d'enregistrement obtenues, après mise en phase, par une technique de soustraction ou d'anti-moyenne, qui permet également de séparer des discontinuités d'un côté du puits et du côté opposé.

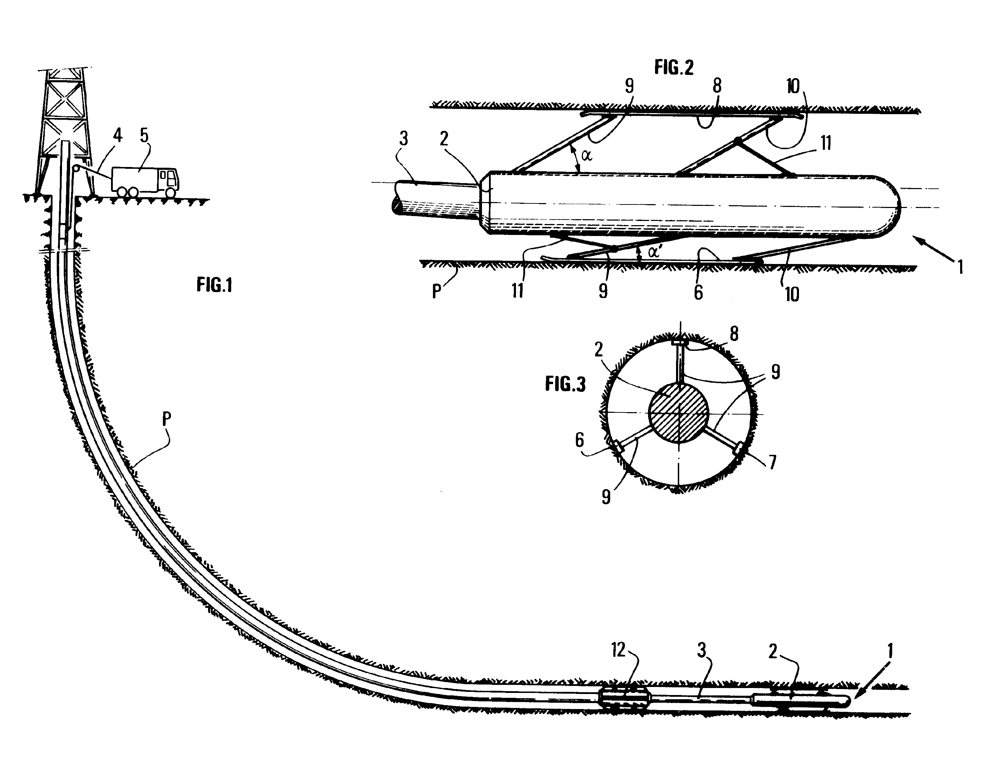

La méthode selon l'invention peut être mise en oeuvre en utilisant un outil de diagraphie pour puits du type sonique par exemple. l'outil comporte (fig. 1 à 3) un corps 2 fixé à l'extrémité d'un train de tiges relativement flexibles 3. L'outil est descendu depuis la surface tout au long du puits P. Lorsqu'il parvient jusqu'aux portions de puits à très forte inclinaison par rapport à la verticale, sa progression est rendue possible par poussée sur le train de tiges 3. Le corps 2 de l'outil de diagraphie contient au moins un transducteur-émetteur d'ondes acoustiques et au moins un transducteur-récepteur pour capter les ondes qui se sont propagées jusqu'à lui après des réflexions ou des réfractions sur différentes discontinuités autour de l'outil de diagraphie qu'il s'agisse de discontinuités géologiques ou du tubage cimenté qui équipe le plus souvent les puits, surtout dans leurs portions faiblement inclinées sur l'horizontale. Ces transducteurs ne sont pas représentés sur les figures.

L'outil de diagraphie 1 est relié à l'installation de surface par un câble multi-fonctions 4 passant à l'intérieur du train de tiges 3.

Pour connecter le câble multi-fonctions à l'outil de diagraphie, on utilise de préférence la méthode décrite par exemple dans le brevet FR 2 501 777 déposée par la demanderesse. Suivant cette méthode, le câble est terminé par une prise femelle qui descend tout le long du train de tiges poussée par un fluide sous-pression jusqu'à venir s'adapter à une prise mâle disposée au sommet du corps de l'outil.

Le câble comporte une ou plusieurs lignes pour transmettre à un laboratoire d'enregistrement 5 en surface, les signaux captés par le transducteur-récepteur ou chacun d'eux. les signaux transmis sont numérisés et enregistrés.

La méthode selon l'invention est mise en oeuvre avec un outil de diagraphie tel que l'on peut modifier la position des transducteur-émetteurs et/ou récepteurs par rapport à l'axe du puits c'est-à-dire que l'on peut faire varier leur distance aux discontinuités environnantes à faible pendage relativement à la direction d'allongement du puits.

Suivant un premier mode de réalisation, la modification de la position des transducteurs est réalisée en utilisant un outil de diagraphie à décentrement. Il comporte par exemple trois patins d'ancrage 6, 7, 8 (fig. 3) disposés à 120° les uns des autres autour du corps. Chacun d'eux est assujetti à deux bras 9, 10 (fig. 2) pouvant pivoter entre une position rapprochée le long du corps et une position d'ouverture. Une tige 11 relie un des bras de chaque paire de bras 9, 10 à un moyen moteur d'un type connu contenu dans le corps et non représenté. De préférence, on utilise un moyen moteur commun pour actionner les tiges 11 de commande associées à deux des patins 6, 7 de manière que leurs déplacements soient identiques et un autre pour commander le mouvement du troisième patin 8. Pour faciliter le déplacement de l'outil 1 le long des portions de puits à faible pendage, on dispose généralement un ou plusieurs dispositifs de centrage 12 d'un type connu intercalés en amont sur la colonne flexible 3.

Lorsque l'outil de diagraphie fonctionne dans une portion de puits horizontale ou à faible pendage, on oriente le corps 2 de manière que les bras 9, 10 associés au troisième patin 8 soient sensiblement dans un plan vertical. La manoeuvre de positionnement peut être effectuée depuis la surface par une rotation plus ou moins prononcée du train de tiges. La détection de la position correcte des bras associés au troisième patin 8 peut être effectuée par différents moyens connus. On peut utiliser par exemple un pendule convenablement disposé dans le corps (et non représenté), qui ferme un contact lorsque les bras du troisième patin se trouvent dans le plan vertical cherché. En donnant la même orientation à l'outil de diagraphie en tout emplacement de la portion de puits étudiée, on peut ainsi maintenir les transducteurs-émetteurs et récepteurs dans une disposition relative toujours identique.

Le décentrement de l'outil de diagraphie est obtenu par action sur les moyens moteurs de manière à diminuer par exemple l'angle d'ouverture α′ des bras 9, 10 associés aux patins 6, 7 et en même temps à augmenter l'angle α correspondant des bras associés au troisième patin 8 (fig. 2).

La réalisation de la méthode selon l'invention nécessite la réalisation d'au moins deux séries de cycles d'émission-réception par déplacement de l'outil de diagraphie le long du puits en faisant varier pour chacune d'elles la position transversale des transducteurs par rapport à l'axe du puits.

Avec un outil de diagraphie à décentrement, la méthode peut être réalisée de deux manières.
1) On pousse l'outil jusqu'à une position initiale au fond de la portion de puits à étudier. On choisit une valeur déterminée pour les angles α et α′ et l'on exerce une traction lente et continue sur le train de tiges. Pendant le déplacement de l'outil, on réalise une série de cycles d'émission-réception acoustique et l'on enregistre une première série de traces ou première section d'iso-déport. Puis on ramène l'outil à sa position initiale et, en modifiant les valeurs des angles α et α′, on réalise une seconde série de cycles d'émission-réception de manière à obtenir une seconde série de traces ou section d'iso-déport. La même opération peut être répétée pour d'autres valeurs d'excentrement de manière à obtenir plus de deux sections d'iso-déport différentes.
2) On peut aussi procéder à une acquisition discontinue. On amène l'outil de diagraphie successivement en une série d'emplacements distincts le long de la portion de puits à étudier. En chaque emplacement, on actionne les moyens moteurs pour donner à l'outil une certaine excentricité de valeur bien choisie, et l'on procède à un premier cycle d'émission-réception. l'outil restant au même emplacement du puits, on modifie son excentrement d'une quantité prédéterminée et on procède à un second cycle d'émission-réception. On répète l'opération éventuellement en modifiant à chaque fois l'excentrement.

L'outil est ensuite déplacé jusqu'à l'emplacement suivant du puits et l'on répète la succession de cycles d'émission-réception en adoptant les mêmes valeurs d'excentrement qu'à l'emplacement précédent. A l'issue d'une série de déplacements longitudinaux, on est en mesure également de réaliser des sections d'iso-déport en associant les traces obtenues pour une même valeur d'excentrement en tous les emplacements successivement occupés par l'outil.

Les séries précédentes ayant été effectuées, on procède alors de préférence à un pré-traitement (facultatif) de manière à éliminer des sections d'iso-déport obtenues, tous les signaux qui ne correspondent pas à des réflexions sur les discontinuités des formations environnantes tels que les arrivées réfractées en ondes P ou S, les ondes d'interface dites de pseudo-Rayleigh ou de Stoneley ou bien encore les ondes de tubage dites de "casing", en appliquant des méthodes bien connues des géophysiciens et notamment une méthode de filtrage matriciel basée sur le calcul de la matrice spectrale des signaux enregistrés. Une telle méthode est décrite par exemple par LACOUME J.L. 1979 "Différentes approches de l'analyse spectrale" in Annales des Telecom; n° 3-4.

Le pré-traitement est simplifié si les géologues ont une connaissance préalable de la zone de terrain traversée et peuvent estimer la vitesse de propagation des ondes.

On choisit alors l'écartement des transducteurs-émetteurs et récepteurs dans l'outil de manière par exemple que chaque train d'ondes d'interface (et chaque train d'ondes S lorsqu' il existe) arrive aux récepteurs postérieurement aux ondes de compression réfléchies, ce qui permet de faire une meilleure discrimination de celles-ci sur les enregistrements.

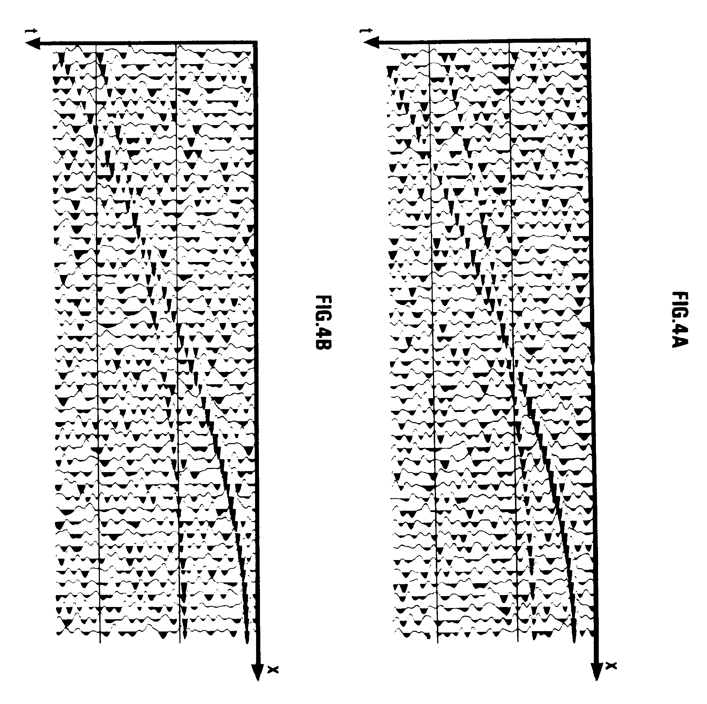

On voit sur les figures 4a et 4b, l'une réalisée avec un outil centré tel qu'il est montré à la figure 3, l'autre avec un outil décentré (fig. 2), que les deux indicatrices de réflexions qui apparaissent, sont décalées en temps respectivement les unes par rapport aux autres.

La variation de la valeur de l'excentrement induit sur les indicatrices de réflexions, un décalage statique qui permet d'une part de différencier celles qui sont associées à des réflecteurs situés au-dessus et au-dessous du puits horizontal en étudiant leur position relative en temps d'une section à l'autre et d'autre part de séparer ces indicatrices.

Le décalage statique est fonction de la valeur de l'excentrement des transducteurs et de la vitesse de propagation des ondes dans la boue remplissant le puits. Pour une vitesse dans la boue de 1600 m/s et une valeur d'excentrement de 1 cm, le décalage statique est estimé à 6 µs. Le décalage en temps des arrivées réfléchies est le double du décalage statique.

En diagraphie acoustique dite en champ total, le pas d'échantillonnage temps est classiquement de 5 ou 2 µs. On peut donc vérifier qu'un excentrement faible induit sur les réflexions des retards en temps nettement supérieurs au pas d'échantillonnage. Avec un outil de diagraphie acoustique de diamètre compris entre 5 et 10 cm, dans un puits foré de 20 cm environ de diamètre, on peut donc réaliser plusieurs séries de cycles avec des valeurs d'excentrement différentes et donc obtenir une pluralité de sections iso-déport.

La méthode comporte ensuite une étape de discrimination permettant de localiser de quel côté du puits sont les discontinuités repérables sur les différentes sections iso-déport, par une combinaison de celles-ci. Pour réaliser cette étape, on utilise une technique connue en soi dite de moyenne ou encore d'anti-moyenne, comme on va le voir ci-après.

On choisit une section de référence, par exemple celle qui correspond à un excentrement nul. Par rapport à la section de référence, chaque section iso-déport est décalée en temps par application d'une correction statique positive (ou négative selon la direction de l'excentrement) et égale au décalage en temps. Celui-ci est calculé en fonction de la valeur de l'excentrement et de la vitesse des ondes dans le fluide du puits pour mettre en phase les réflexions associées à des réflecteurs provenant du dessous (ou selon le cas du dessus) du puits.

Les sections ayant été mises en phase, on peut choisir deux techniques de combinaison déjà citées.

La première consiste à additionner toutes les sections iso-déport après décalage. Si N est leur nombre, l'amplitude des signaux sur les indicatrices en phase est multipliée par N, le rapport du signal au bruit est amélioré d'un facteur √N. Les indicatrices déphasées conservent leurs amplitudes initiales.

La seconde technique consiste à soustraire de la section de référence chacune des sections d'iso-déport obtenues. Dans ce cas, les indicatrices mises en phase associées à des réflecteurs situés au-dessus du puits (ou au-dessous selon le cas) s'éliminent et la section résultante ne met en évidence que des réflexions associées à des réflecteurs situés au-dessous du puits (ou au-dessus selon le cas). Il faut noter que dans chaque section résultante, chaque indicatrice de réflexion est composée d'un doublet de réflexions d'amplitudes opposées séparées par un intervalle de temps égal au décalage statique. On peut procéder à la remise en forme de la réflexion par application d'un opérateur connu des spécialistes sous le nom d'opérateur de Bacchus. Après remise en forme, les sections résultantes peuvent être mises en phase et sommées. Dans ce cas l'amplitude des indicatrices est multipliée par 2 (N-1) et le rapport du signal au bruit est multiplié par √N.

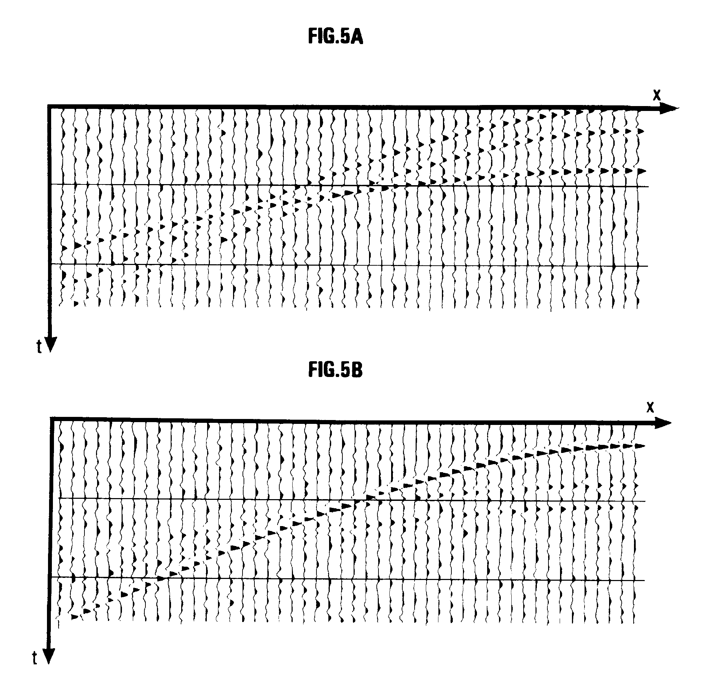

Les figures 5a, 5b illustrent la technique de combinaison par mise en phase et moyenne dans le cas où N est égal à 2. L'extraction des réflexions situées au-dessus du puits est présentée à la figure 5a, celle des réflexions situées au-dessous, à la figure 5b. On peut noter sur chacune des sections un résidu important des ondes déphasées.

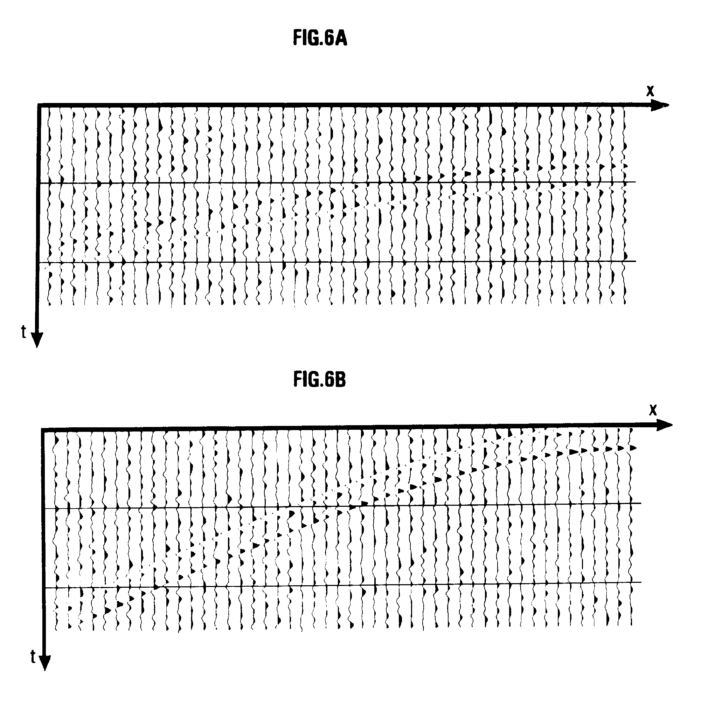

Les figures 6a, 6b montrent les effets de la second technique de combinaison par mise en phase et anti-moyenne dans le cas aussi où N = 2. L'extraction des réflexions situées au-dessus du puits est représentée à la figure 6a, celles des réflexions situées au-dessous, à la figure 6b. On observe que chaque réflexion est représentée par un doublet de réflexions d'amplitudes et de signes opposés.

Après séparation des réflexions, on dispose d'au moins deux jeux de sections d'iso-déport. Le premier jeu contient les réflexions associées aux marqueurs situés au-dessus du puits, le second, celles associées aux marqueurs situés au-dessous.

Aux jeux de sections d'iso-déport obtenus par la méthode selon l'invention, on peut appliquer ensuite, si besoin est, d'autres techniques connues de traitement : corrections statiques, corrections d'obliquité, passage en collection à point milieu commun, analyse de vitesse et sommation des traces à point milieu commun, si chaque jeu contient plusieurs sections d'iso-déport, ou opération de migration comme il est bien connu des spécialistes.

La description ci-dessus se rapporte à une mise en oeuvre de la méthode selon l'invention au moyen d'un outil de diagraphie pourvu de patins dont le déplacement permet de faire varier son excentrement dans la section du puits.

Des outils de diagraphie différents peuvent aussi être employés pour la mise en oeuvre de la méthode.

On peut par exemple utiliser un outil de diagraphie dépourvu de moyens de centrage propres. l'outil est descendu dans le puits associé à des dispositifs de centrage classiques tel que le centreur 12 (fig. 1) et l'on réalise au moins une première série de cycles d'émission-réception et enregistrement en déplaçant l'outil le long de la portion de puits à explorer. Puis, on le remonte pour lui ôter les dispositifs de centrage 12 et on répète les opérations précédentes, l'outil de diagraphie reposant sur la paroi la plus basse du puits et donc décentré par rapport au cas précédent, de manière à obtenir au moins une seconde série de cycles. la combinaison des enregistrements par moyenne et anti-moyenne est ici effectuée à partir des deux sections d'iso-déport obtenues respectivement avec l'outil centré et après son décentrement.

On ne sortirait pas non plus du cadre de l'invention en utilisant un outil de diagraphie où le décentrement des transducteurs-émetteurs et/ou récepteur est obtenu par le déplacement de ceux-ci par rapport au corps de l'outil ou bien encore en disposant dans le corps plusieurs transducteurs latéralement décalés les uns par rapport aux autres de manière à faire varier leurs distances aux marqueurs qu'il s'agit de discriminer. On pourra adopter différentes combinaisons et par exemple la combinaison d'un transducteur-émetteur avec deux transducteurs-récepteurs décalés. le décalage en temps des signaux réfléchis entre les deux sections d'iso-déport obtenues est ici égal au décalage statique.

On ne sortirait pas non plus du cadre de l'invention en utilisant un outil de diagraphie où les transducteurs sont reliés au corps de l'outil par des cardans de manière que leur orientation ne change pas si l'outil vient à tourner sur lui-même au cours de ses déplacements le long du puits.

## Revendications

1. Méthode d'acquisition et de traitement de signaux obtenus dans des puits ou forage (P) traversant une zone souterraine, permettant de faire une discrimination entre des discontinuités géologiques, notamment celles qui sont orientées sensiblement dans la même direction que le puits et situées de part et d'autre de celui-ci, la méthode comportant le déplacement d'un outil de diagraphie le long du puits et la réalisation de cycles d'émission-réception comprenant chacune l'émission de signaux dans les formations du sous-sol environnant le puits par des moyens d'émission, la réception des signaux renvoyée par les discontinuités du sous-sol par des moyens de réception et l'enregistrement des signaux reçus de manière à réaliser des sections représentatives des formations autour du puits, caractérisée en ce qu'elle comporte :
- la réalisation par un déplacement de l'outil en une succession d'emplacements le long d'une portion au moins du puits, d'au moins deux séries de cycles d'émission-réception correspondant à des positions transversales différentes des moyens d'émission et/ou des moyens de réception par rapport à l'axe du puits, le passage d'une position à une autre étant effectué par une translation d'amplitude contrôlée desdits moyens d'émission et/ou de réception sensiblement dans un même plan axial déterminé, de manière que les distances entre lesdits moyens et les discontinuités situées de part et d'autre soient différentes pour chaque série de cycles effectuée, et
- la combinaison entre elles des sections d'enregistrement obtenues à la suite desdites séries de cycles le long de la portion de puits, de manière à réaliser des sections où lesdites discontinuités de part et d'autre du puits sont séparées les unes des autres.

2. Méthode selon la revendication 1, caractérisée en ce que, en chaque emplacement le long du puits occupé par l'outil de diagraphie, on réalise au moins deux cycles d'émission-réception successifs, la position transversale des moyens d'émission et/ou des moyens de réception relativement à l'axe du puits étant différente à chaque cycle.

3. Méthode selon la revendication 1, caractérisée en ce que lesdites séries de cycles d'émission-réception sont effectuées successivement en déplaçant transversalement les moyens d'émission et/ou les moyens de réception par rapport à l'axe de puits entre deux séries successives.

4. Méthode selon l'une des revendications 1 à 3, caractérisée en ce que lesdits déplacements transversaux sont effectués par déplacement de l'outil de diagraphie relativement au puits.

5. Méthode selon l'une des revendications 1 à 3, caractérisée en ce que les moyens d'émission et/ou les moyens de réception comportent au moins deux unités distinctes latéralement décalées l'un par rapport à l'autre, relativement à l'axe du puits, les unités employées pour effectuer deux cycles d'émission-réception à un même emplacement longitudinal du puits, étant choisies de manière à faire varier lesdites distances.

6. Méthode selon l'une des revendications 1 à 3, caractérisée en ce que les positions transversales différentes des moyens d'émission et/ou des moyens de réception sont obtenues par déplacement latéral de ces dits moyens relativement à l'outil de diagraphie.

7. Méthode selon la revendication 1, caractérisée en ce que ladite combinaison des enregistrements comporte une mise en phase des signaux enregistrés associés à des discontinuités de part et d'autre du puits en tenant compte des différents décalages entre les positions transversales successives desdits moyens d'émission et/ou de réception.

8. Méthode selon la revendication 7, caractérisée en ce que ladite combinaison des enregistrements comporte en outre une sommation des différentes sections après décalage.

9. Méthode selon la revendication 7, caractérisée en ce que ladite combinaison des enregistrements comporte en outre après ledit décalage, une soustraction à une section prise comme référence, de chacune des autres sections, de manière à mettre en évidence des discontinuités d'un seul côté du puits.

10. Méthode selon la revendication 1, caractérisée en ce que ledit outil de diagraphie est déplacé dans une portion de puits sensiblement horizontal.

11. Méthode selon l'une des revendications précédentes, caractérisée en ce que les signaux émis sont des signaux acoustiques.

12. Méthode selon l'une des revendications précédentes, caractérisée en ce que les signaux émis sont des signaux électro-magnétiques.

13. Dispositif d'acquisition et de traitement des enregistrements de signaux captés dans un puits, permettant la mise en oeuvre de la méthode selon l'une des revendications précédentes, caractérisé en ce qu'il comporte en combinaison un outil de diagraphie (1) pourvu de moyens d'émission de signaux, de moyens de réception de signaux et de moyens de déplacement transversal adaptés à translater de façon contrôlée les moyens d'émission et/ou de réception d'une position à une autre sensiblement dans un même plan axial du puits, des moyens de transmission pour le transfert des signaux captés par les moyens de réception à un ensemble de commande et d'enregistrement pourvu de moyens pour combiner des signaux obtenus en réalisant au moins deux séries de cycles d'émission-réception pour lesquels les positions transversales respectives desdits moyens d'émission et/ou de réception sont différentes.

14. Dispositif selon la revendication 13, caractérisé en ce que l'outil de diagraphie (1) comporte des moyens (9-11) pour les translater dans un même plan axial du puits.

15. Dispositif selon la revendication 13, caractérisé en ce que l'outil de diagraphie (1) comporte plusieurs moyens d'émission et/ou de réception disposés de manière différente à l'intérieur du corps (2) de l'outil.

16. Dispositif selon la revendication 13, caractérisé en ce que l'outil de diagraphie (1) comporte des moyens d'émission et/ou de réception déplaçables à l'intérieur du corps (2) de l'outil.

## Patentansprüche

1. Verfahren zum zur Erfassung und Verarbeitung von Signalen die in eine unterirdische Zone durchsetzenden Bohrlöchern oder Schächten (P) erhalten wurden, das die Durchführung einer Diskriminierung zwischen geologischen Diskontinuitäten, insbesondere denjenigen ermöglicht, die im wesentlichen in der gleichen Richtung wie das Bohrloch orientiert und zu beiden Seiten hiervon angeordnet sind, wobei das Verfahren die Bewegung eines Diagraphiewerkszeugs längs des Bohrlochs und die Realisierung von Sende- Empfangszyklen umfasst, die je das Aussenden von Signalen in Formationen des Untergrundes in der Umgebung des Bohrlochs mittels Emissionseinrichtungen umfassen, weiter umfassend den Empfang der durch die Diskontinuitäten des Untergrundes durch die Empfangsmittel zurückgeschickten Signale sowie das Aufzeichnen der empfangenen Signale, derart, daß repräsentative Abschnitte der Formationen um das Bohrloch realisiert werden, dadurch gekennzeichnet, daß es umfaßt:
- Die Realisierung durch ein Bewegen des Werkzeugs, innerhalb einer Aufeinanderfolge von Orten längs wenigstens eines Teiles des Bohrlochs, von wenigstens zwei Reihen von Sende- Empfangszyklen, welche unterschiedlichen Querpositionen der Sende- und/oder Empfangsmittel bezogen auf die Achse des Bohrlochs entsprechen, wobei der Übergang von einer Position zu einer anderen durchgeführt wird durch eine Translation bei geregelter Amplitude dieser Sende- und/oder Empfangsmittel im wesentlichen in einer bestimmten Axialebene, derart, daß die Entfernungen zwischen diesen Mitteln und den Diskontinuitäten zu beiden Seiten unterschiedlich für jede durchgeführte Serie von Zyklen ist, und
- die Kombination der Aufzeichnungsabschnitte untereinander, die anschliessend an diese Reihen von Zyklen längs des Teiles des Bohrlochs derart erhalten wurden, daß Abschnitte realisiert werden, wo diese Diskontinuitäten zu beiden Seiten des Bohrlochs von einander getrennt sind.

2. Verfahren nach Anspruch 1, dadurch gekennzeichnet, daß an jedem vom Diagraphiewerkzeug längs des Bohrlochs eingenommenen Ort - wenigstens zwei übereinanderfolgende Sende- Empfangszyklen geführt werden, wobei die Transversalposition der Sende- und/oder Empfangsmittel relativ zur Achse des Bohrlochs unterschiedlich bei jedem Zyklus ist.

3. Verfahren nach Anspruch 1, dadurch gekennzeichnet, daß diese Reihen von Sende- Empfangszyklen nacheinander durchgeführt werden, in dem transversal die Sendemittel und/oder die Empfangsmittel bezogen auf die Achse des Bohrlochs zwischen zwei aufeinanderfolgenden Reihen durchgeführt werden.

4. Verfahren nach einem der Ansprüche 1 - 3, dadurch gekennzeichnet, daß diese transversalen Bewegungen durchgeführt werden durch die Bewegung des Diagraphiewerkzeugs relativ zum Bohrloch.

5. Verfahren nach einem der Ansprüche 1 - 3, dadurch gekennzeichnet, daß die Sende- und/oder Empfangsmittel wenigstens zwei unterschiedliche seitlich bezüglich einander relativ zur Achse des Bohrlochs versetzte Einheiten umfassen, wobei die zur Durchführung zweier Sende- Empfangszyklen an ein und dem gleichen Longitudinalort des Bohrlochs verwendeten Einheiten derart gewählt werden, daß eine Variation dieser Entfernungen veranlaßt wird.

6. Verfahren nach einem der Ansprüche 1 - 3, dadurch gekennzeichnet, daß die unterschiedlichen Transversalpositionen der Sende- und/oder Empfangsmittel erhalten werden durch die seitliche Bewegung dieser Mittel relativ zum Diagraphiewerkzeug.

7. Verfahren nach Anspruch 1, dadurch gekennzeichnet, daß diese Kombination der Aufzeichnungen ein Inphase- bringen der aufgezeichneten Signale in Zuordnung zu Diskontinuitäten zu beiden Seiten des Bohrlochs umfasst, in dem man unterschiedliche Verschiebungen oder Versetzungen zwischen den aufeinanderfolgenden Transversalpositionen dieser Sende- und/oder Empfangssmittel berücksichtigt.

8. Verfahren nach Anspruch 7, dadurch gekennzeichnet, daß diese Kombination der Aufzeichnungen im übrigen eine Summierung der verschiedenen Abschnitte nach dem Bewegen bzw. Verschieben umfasst.

9. Verfahren nach Anspruch 7, dadurch gekennzeichnet, daß diese Kombination der Aufzeichnungen im übringen nach diesem Bewegen oder Verschieben eine Subtraktion bei einem als Bezug genommenen Abschnitt jedes von den anderen Abschnitten umfasst, derart, daß Diskontinuitäten einer einzigen Seite des Bohrlochs evident werden.

10. Verfahren nach Anspruch 1, dadurch gekennzeichnet, das dieses Diagraphiewerkzeug in einem im wesentlichen horizontalen Teil des Bohrlochs bewegt oder verschoben wird.

11. Verfahren nach einem der vorhergehenden Ansprüche, dadurch gekennzeichnet, daß die ausgesandten Signale akustische Signale sind.

12. Verfahren nach einem der vorhergehenden Ansprüche, gekennzeichnet dadurch, daß die ausgesandten Signale elektromagnetische Signale sind.

13. Vorrichtung zur Erfassung und Verarbeitung der Aufzeichnungen von in einem Bohrloch eingefangenen Signalen, die die Durchführung des Verfahrens nach einem der vorhergehenden Ansprüche gestattet, dadurch gekennzeichnet, daß sie in Kombination ein Diagraphiewerkzeug (1) umfasst, das mit Mitteln zum Aussenden von Signalen, Mitteln zum Empfang von Signalen und Mitteln zur Querverschiebung versehen ist, die so ausgelegt sind, daß sie in kontrollierter Weise die Sende- und/oder Empfangsmittel von einer Position in eine andere in im wesentlichen ein und der gleichen Axialebene des Bohrlochs translatorisch bewegen, wobei Transmissionsmittel für die Übertragung der durch die Empfangsmittel empfangenen Signale an eine Steuer- und Aufzeichnungsanordnung vorgesehen sind, die mit Mitteln ausgestattet ist, um Signale zu kombinieren, welche erhalten werden, indem man wenigstens zwei Serien von Sende- Empfangszyklen realisiert, für die die jeweiligen Transversalpositionen dieser Sende- und/oder Empfangsmittel unterschiedlich sind.

14. Vorrichtung nach Anspruch 13, dadurch gekennzeichnet, daß das Diagraphiewerkzeug (1) Mittel (9-11) umfasst, um sie in ein und der gleichen Axialebene des Bohrlochs translatorisch zu bewegen.

15. Vorrichtung nach Anspruch 13, dadurch gekennzeichnet, daß das Diagraphiewerkzeug (1) mehrere Sende- und /oder Empfangsmittel umfasst, die in unterschiedlicher Weise im Innern des Körpers (2) des Werkzeugs angeordnet sind.

16. Vorrichtung nach Anspruch 13, dadurch gekennzeichnet, daß das Diagraphiewerkzeug (1) Sende- und/oder Empfangsmittel umfasst, die im Innern des Körpers (2) des Werkzeugs bewegbar oder verschiebbar sind.

## Claims

1. Method of acquiring and processing the signals obtained from a well or borehole (P) passing through an underground zone, permitting discrimination between the geological discontinuities, in particular, those which are orientated substantially in the same direction as the well and situated on each side of it, the method comprising the displacement of a well logging tool along the well and carrying out transmission-reception cycles each comprising the transmission of signals in the formations comprising the sub stratum surrounding the well, using a means of transmission, the reception of the signals returned by the discontinuities in the sub stratum by using a means of reception and recording of the signals received in order to produce sections which are representative of the formations around the well, characterised in that it comprises :
- carrying out, by displacing the tool over a successive number of positions along at least one portion of the well, at least two series of transmission-reception cycles corresponding to the different transversal positions of the means of transmission and/or the means of reception relative to the axis of the well, the change from one position to another being carried out by a transversal movement of controlled amplitude of the said means of transmission and/or reception substantially in the same determined axial plane, in order that the distances between the said means and the discontinuities situated on each side are different for each series of cycles carried out, and
- the combination of the recorded sections obtained following the said series of cycles carried out along the portion of the well, in order to produce sections where the said discontinuities on each side of the well are separate from each other.

2. Method in accordance with claim 1, characterised in that, at each position along the well occupied by the well logging tool, at least two successive transmission-reception cycles are carried out, the transversal position of the means of transmission and/or the means of reception relative to the axis of the well being different for each cycle.

3. Method in accordance with claim 1, characterised in that the said series of transmission-reception cycles are carried out successively by transversely displacing the means of transmission and/or the means of reception relative to the axis of the well, between two successive series.

4. Method in accordance with one of claims 1 to 3, characterised in that the said transversal displacements are carried out by displacing the well logging tool relative to the well.

5. Method in accordance with one of claims 1 to 3, characterised in that the means of transmission and/or the means of reception comprise at least two distinct units offset laterally relative to each other and relative to the axis of the well, the units used to carry out two transmission-reception cycles at the same longitudinal position in the well being chosen so that the said distances are varied.

6. Method in accordance with one of claims 1 to 3, characterised in that the different transversal positions of the means of transmission and/or the means of reception are obtained by lateral displacement of the said means relative to the well logging tool.

7. Method in accordance with claim 1, characterised in that the said combination of recordings comprises a synchronisation of the recorded signals associated with the discontinuities on each side of the well, taking into consideration the different offset positions between the successive transversal positions of the said means of transmission and/or means of reception.

8. Method in accordance with claim 7, characterised in that the said combination of recordings also comprises a summation of the different sections, following the offsetting stage.

9. Method in accordance with claim 7, characterised in that the said combination of recordings also comprises, following the said offsetting stage, a subtraction stage, at a section taken as a reference, for each of the other sections in order to reveal the discontinuities on one side only of the well.

10. Method in accordance with claim 1, characterised in that the said well logging tool is displaced in a substantially horizontal portion of the well.

11. Method in accordance with one of the preceding claims, characterised in that the signals transmitted are acoustic signals.

12. Method in accordance with one of the preceding claims, characterised in that the signals transmitted are electromagnetic signals.

13. Device for acquiring and processing the recordings of signals obtained in a well and permitting the application of the method in accordance with one of the preceding claims, characterised in that it comprises, in combination, a well logging tool (1) provided with a means of transmitting signals, a means of receiving signals and a means of controlled transversal displacement designed to transversely relocate the means of transmission and/or means of reception from one position to another substantially in the same axial plane of the well, a means of transmission for transferring the signals obtained by the means of reception to a control and recording unit provided with a means for combining the signals obtained by carrying out at least two series of transmission-reception cycles for which the respective transversal positions of the said means of transmission and/or means of reception are different.

14. Device in accordance with claim 13, characterised in that the well logging tool (1) comprises a means (9-11) of relocation in the same axial plane of the well.

15. Device in accordance with claim 13, characterised in that the well logging tool (1) comprises several means of transmission and/or reception arranged in a different manner inside the body (2) of the tool.

16. Device in accordance with claim 13, characterised in that the well logging tool (1) comprises a means of transmission and/or reception which is capable of being displaced within the body (2) of the tool.
